**Europäisches Patentamt**

(19) **European Patent Office**

**Office européen des brevets**

(11) Veröffentlichungsnummer : **0 099 353**
**B1**

(12) **EUROPÄISCHE PATENTSCHRIFT**

(45) Veröffentlichungstag der Patentschrift :
07.05.86

(51) Int. Cl.⁴ : **B 65 G   1/06**, B 65 G   1/08,
A 47 F   1/00

(21) Anmeldenummer : **83890115.5**

(22) Anmeldetag : **06.07.83**

(54) **Lagereinrichtung.**

(30) Priorität : **06.07.82 AT 2621/82**

(43) Veröffentlichungstag der Anmeldung :
**25.01.84 Patentblatt 84/04**

(45) Bekanntmachung des Hinweises auf die Patenterteilung : **07.05.86 Patentblatt 86/19**

(84) Benannte Vertragsstaaten :
**BE CH DE FR GB IT LI LU NL SE**

(56) Entgegenhaltungen :
**CH-A- 468 916**
**CH-A- 542 137**
**DE-A- 2 835 404**
**DE-B- 1 506 975**

(73) Patentinhaber : **Tivadar, Mikes, Mag. pharm. Dr.**
**Universitätsstrasse 10**
**A-1090 Wien (AT)**

(72) Erfinder : **Tivadar, Mikes, Mag. pharm. Dr.**
**Universitätsstrasse 10**
**A-1090 Wien (AT)**

(74) Vertreter : **Gibler, Ferdinand, Dipl.Ing.Dr.tech.**
**Dorotheergasse 7/14**
**A-1010 Wien (AT)**

**Beschreibung**

Die Erfindung bezieht sich auf eine Lagereinrichtung für eine Vielzahl von verschiedenen zu lagernden Gegenständen, insbesondere Packungen von Medikamenten, bei der mit je einem Gegenstand oder einer geringen Anzahl verschiedener zu lagernder Gegenstände beschickbare lose Behälter in einem Aufnahmegestell auf Stellflächen verschiebbar gehalten sind, wobei die Behälter in einer Ausstoßrichtung belastet und mittels mindestens einer auslösbaren Rückhaltereinrichtung auf der Stellfläche gehalten sind.

Derartige Lagereinrichtungen sind seit langem bekannt. Solche Einrichtungen weisen meist ein Reihe von ebenen und mit ihren Hauptachsen horizontal verlaufenden Stellflächen auf, auf denen Behälter abgestellt werden können. Um die entsprechenden Behälter leichter finden zu können sind die Stellplätze der einzelnen Behälter nach einem Koordinatensystem bezeichnet, wobei die Behälter meist auch mit den Koordinaten ihrer Stellplätze bezeichnet sind.

Trotz dieser organisatorischen Maßnahmen ist es bei größeren derartigen Lagereinrichtungen oft schwer den gewünschten Behälter bzw. Gegenstand rasch aufzufinden.

Es sind auch schon Lagereinrichtungen bekannt geworden, bei denen das Aufnahmegestell in einzelne mit einer Klappe verschlossene Abteile unterteilt ist. Diese Klappen sind mit einer Zuhaltung versehen, die über eine Auslöseeinrichtung, die mittels eines bestimmten Signals aktivierbar ist, entriegelbar ist. Bei dieser ist es zwar möglich durch Abgabe eines entsprechenden Signals die Klappe eines bestimmten Abteils zu öffnen, wobei dabei auch noch eine optische Anzeige aktiviert werden kann, doch ist dabei die starre Zuordnung eines zu lagernden Gegenstandes zu einem bestimmten Abteil von Nachteil.

Außerdem ist es auch nicht bzw. nur sehr schwer möglich die gelagerten Gegenstände mittels automatisch gesteuerter Einrichtungen zu entnehmen und zu einer Ausgabestation zu bringen.

Weiters wurde durch die DE-OS 2 835 404 eine Einrichtung der eingangs erwähnten Art bekannt, bei der für eine große Anzahl von auf einer Stellfläche angeordneten Behältern eine auslösbare Rückhalteeinrichtung vorgesehen ist. Dabei ist jeder Rückhalteeinrichtung ein bestimmter Code zugeordnet, wobei durch das Auslösen einer Rückhalteeinrichtung ein Behälter in Längsrichtung der entsprechenden Stellfläche ausstoßbar ist. Dabei ist die Auslösung lediglich zeitgesteuert und erfordert eine entsprechend genaue Justierung.

Der Nachteil dieser bekannten Lösung besteht darin, daß es nicht möglich ist einen ganz bestimmten Behälter von der Stellfläche abrufen zu können. Gerade dies wäre aber in vielen Fällen wünschenswert, insbesondere bei Lagereinrichtungen für eine große Anzahl verschiedener Artikel, von denen jeweils nur relativ geringe Mengen gleichzeitig abgerufen werden, wie dies z. B. in Apotheken der Fall ist.

Ziel der Erfindung ist es eine Lagereinrichtung der eingangs erwähnten Art vorzuschlagen, die einerseits ein leichtes und rasches Auffinden der einzelnen gelagerten Gegenstände ermöglicht und deren konzept auch eine Entnahme der gelagerten Gegenstände mittels einer automatisch gesteuerten Einrichtung erlaubt.

Erfindungsgemäß wird dies dadurch erreicht, daß jeder Behälter in einer eigenen Rückhalteeinrichtung in dem Aufnahmegestell gehalten ist, welche Rückhalteeinrichtungen mittels diesen zugeordneten Auslöseeinrichtungen lösbar oder überwindbar sind, wobei die Ausstoßrichtung jedes Behälters senkrecht zur Längserstreckung der die Behälter nebeneinander aufnehmenden Stellfläche verläuft, und jedem Behälter in an sich bekannter Weise ein bestimmter Code zugeordnet ist und für jeden Behälter eine an sich bekannte Empfangs- und eine Code-Erkennungseinrichtung vorgesehen ist, die bei Einlangen von dem einem Behälter zugeordneten Code entsprechenden Signalen die Auslöseeinrichtung der den entsprechenden Behälter haltenden Rückhalteeinrichtung aktiviert.

Dadurch wird sichergestellt, daß bei Abgabe des entsprechenden Signals der betreffende Behälter allein aus dem Aufnahmegestell ausgeschoben wird, wobei die Reihenfolge in der einzelne Behälter abgerufen werden, frei wählbar ist. Außerdem ergibt sich der Vorteil, daß jeder Behälter an einem beliebigen Platz, insbesondere am Ende der Stapelreihe im Aufnahmegestell in dieses eingeschoben werden kann. Durch den jedem Behälter eigenen Code ist eine entsprechende Erkennung unabhängig vom Platz im Aufnahmegestell, an dem sich der Behälter befindet, möglich.

Weiters wird durch die vorgeschlagenen Maßnahmen auch die Möglichkeit geschaffen die Beschickung der Behälter auf einfache Weise zu automatisieren. So ist es möglich die zu lagernden und codierten Gegenstände über einen Fülltrichter und eine Fördereinrichtung an einer Codeerkennungseinrichtung vorbeizuführen und in die ebenfalls an einer Codeerkennungseinrichtung vorbeigeführten Behälter einzubringen, wobei die beiden Codeerkennungseinrichtungen mit einem Computer verbunden sind. Auf diese Weise können die Behälter sehr einfach automatisch beschickt werden, wobei trotzdem der Überblick über die Beschickung der Behälter erhalten bleibt. Für kleinere derartige Einrichtungen könnten die Empfangs- und Code-Erkennungseinrichtungen im Aufnahmegestell untergebracht werden, wobei die Codeerkennungseinrichtung den dem entsprechenden Behälter eingeprägten Code mit dem den einlangenden Signalen entnehmbaren Code vergleicht.

Nach einem weiteren Merkmal der Erfindung ist vorgesehen, daß jeder Behälter mit einer Antenne, sowie einer Empfangs- und Code-Erkennungseinrichtung und einer dieser nachgeschalteten Auslöseeinrichtung versehen ist, wobei die zur Abstrahlung der dem Code je eines Behälters entsprechenden Signale vorgesehenen Antenne bzw. die dieser zugeordneten Code-Erzeugungseinheit vorzugsweise von einer Eingabe- und Verarbeitungseinheit, gesteuert ist, die gegebenenfalls durch einen mit Eingabestationen einem Datenspeicher und einem Drucker verbundenen Rechner gebildet ist. Dadurch ist es auf besonders einfache Weise möglich die gewünschten gelagerten Gegenstände rasch aufzufinden, wobei sich eine umständliche Verdrahtung erübrigt. Außerdem ist es möglich die Lagerbewegungen gleichzeitig mittels des Rechners auszuwerten.

Bei einer bevorzugten Ausführungsform der Erfindung ist vorgesehen, daß die Rückhalteeinrichtung durch einen bei vollständig in das Aufnahmegestell eingeschobenen Behälter eine Kante des Aufnahmegestells hintergreifenden Haken gebildet ist, der mit dem Anker eines die Auslöseeinrichtung bildenden Elektromagneten verbunden und mittels einer Feder gegen seine Halteposition vorgespannt ist. Dadurch kann auf die Einhaltung relativ genauer Positionen für die Behälter verzichtet werden und die Behälter können an jeder beliebigen Stelle in das Aufnahmegestell eingeschoben und aus diesem wieder ausgeschoben werden.

Bei einer erfindungsgemäßen Lagereinrichtung mit einem Aufnahmegestell mit gegen die Horizontale geneigten Stellflächen für die Behälter und vor den unteren Kanten einer jeder Stellfläche angeordnetem Förderband kann nach einem weiteren Merkmal der Erfindung vorgesehen sein, daß mindestens ein Vertikalförderer vorgesehen ist, der seitlich der Stellflächen bzw. der Förderbänder angeordnet ist und daß weiters Vorrichtungen zum Überschieben von Behältern vom Vertikalförderer auf eine Stellfläche vorgesehen sind.

Auf diese Weise ist eine automatische Beschickung des Aufnahmegestells und eine automatische Entnahme der Behälter auch bei größeren Aufnahmegestellen möglich. Dabei können Behälter über den Vertikalförderer auf die Höhe einer bestimmten Stellfläche gebracht und danach auf diese überschoben werden, während andererseits ein aus dem Aufnahmegestell ausgeschobener bzw. von einer Stellfläche abgeschobener Behälter über ein Förderband zu einem Vertikalförderer gebracht und von diesem zu einer Ausgabestation gebracht wird.

In diesem Zusammenhang ist es zweckmäßig, wenn im Bereich jeder Stellfläche eine sich im wesentlichen über die gesamte Länge der Stellfläche erstreckende Fördereinrichtung vorgesehen ist, die an einem auf der Stellfläche befindlichen Behälter angreift, wodurch der Stellraum im Aufnahmegestell optimal genützt werden kann.

Eine weitere Ausführungsform einer erfindungsgemäßen Lagereinrichtung ist dadurch gekennzeichnet, daß das Aufnahmegestell eine einer Schraubenlinie folgende Stellfläche aufweist, die außerdem gegen eine parallel zu ihr laufende Rinne in Querrichtung nach unten geneigt ist. Dadurch ergeben sich im Hinblick auf den Betrieb der Einrichtung besonders einfache Verhältnisse. So können die Behälter einfach oben auf die Stellfläche aufgegeben werden und rutschen bei Entnahme eines Behälters selbsttätig nach. Im Falle der Aktivierung einer Auslöseeinrichtung rutscht der betreffende Behälter auf die Rinne und auf dieser nach unten zur Ausgabestelle.

Eine in konstruktiver Hinsicht sehr einfache Ausführungsform zeichnet sich dadurch aus, daß die Rückhalteeinrichtung durch einen sich an der Vorderkante der Stellfläche erstreckenden Wulst und die Auslöseeinrichtung durch einen von einer Feder beaufschlagten Stößel gebildet ist, der mittels einer über einen Elektromagneten entriegelbaren Sperrklinke in seiner Spannstellung haltbar ist, wobei im Bereich der Hinterkante der Stellfläche eine Prallwand angeordnet ist, wobei die Behälter an beliebigen Stellen der Stellfläche abgestellt werden können.

Um ein leichtes Bewegen der Behälter in zwei zueinander senkrechten Richtungen zu ermöglichen, ist es vorteilhaft, wenn die Behälter auf Kugelrollen abgestützt sind.

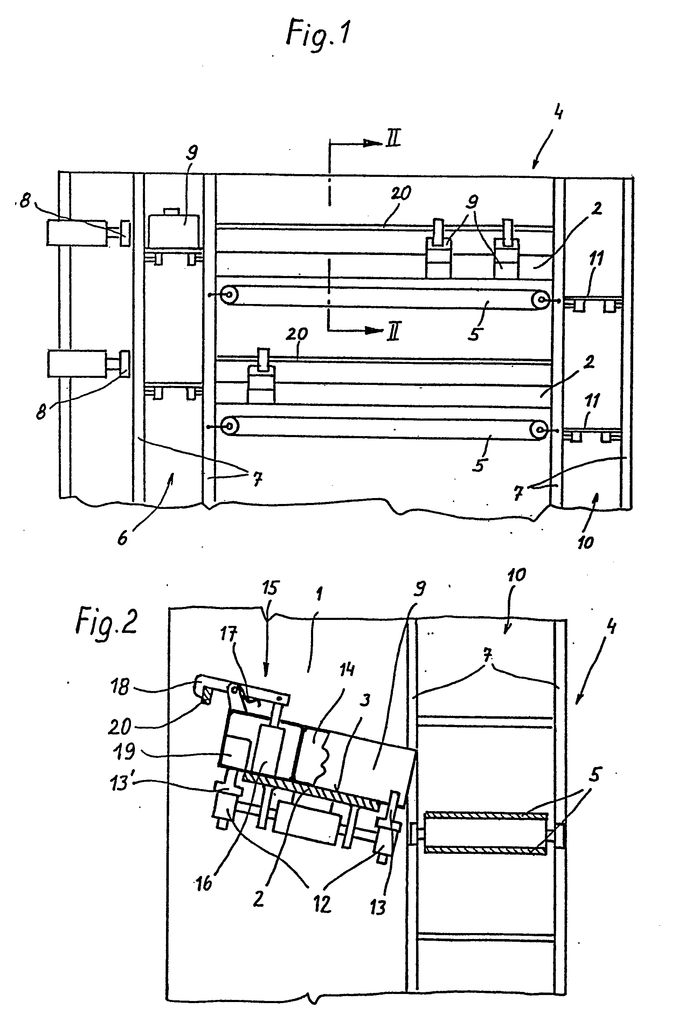

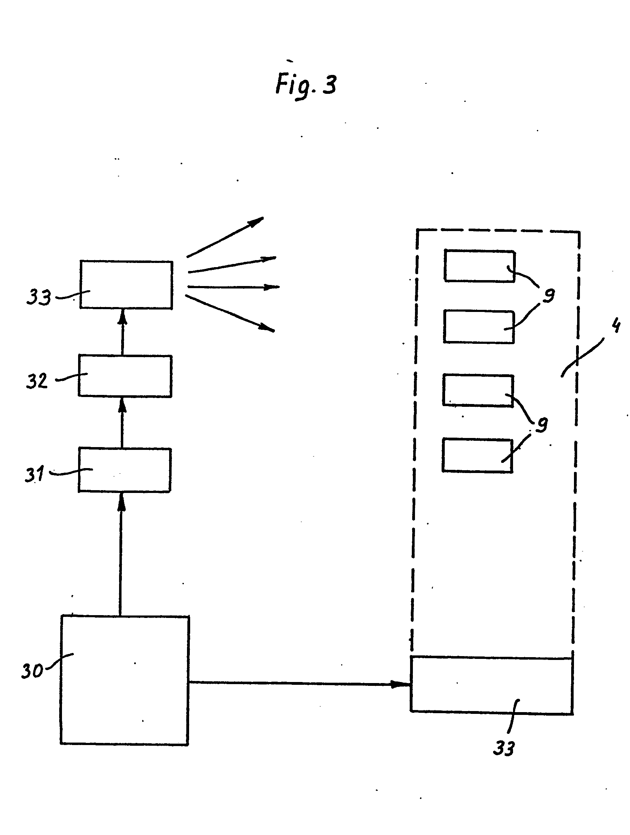

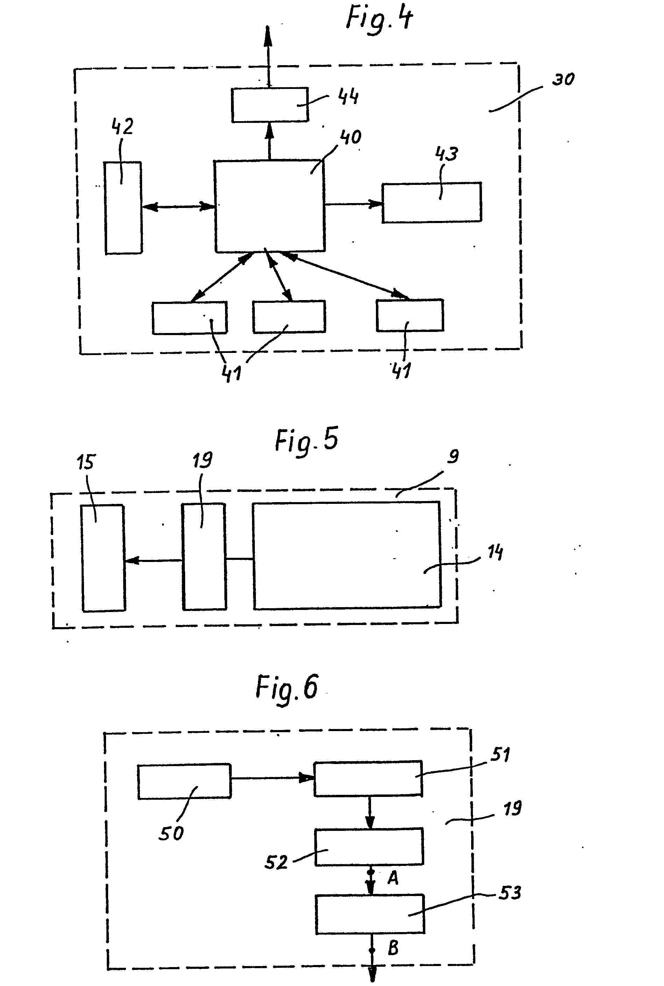

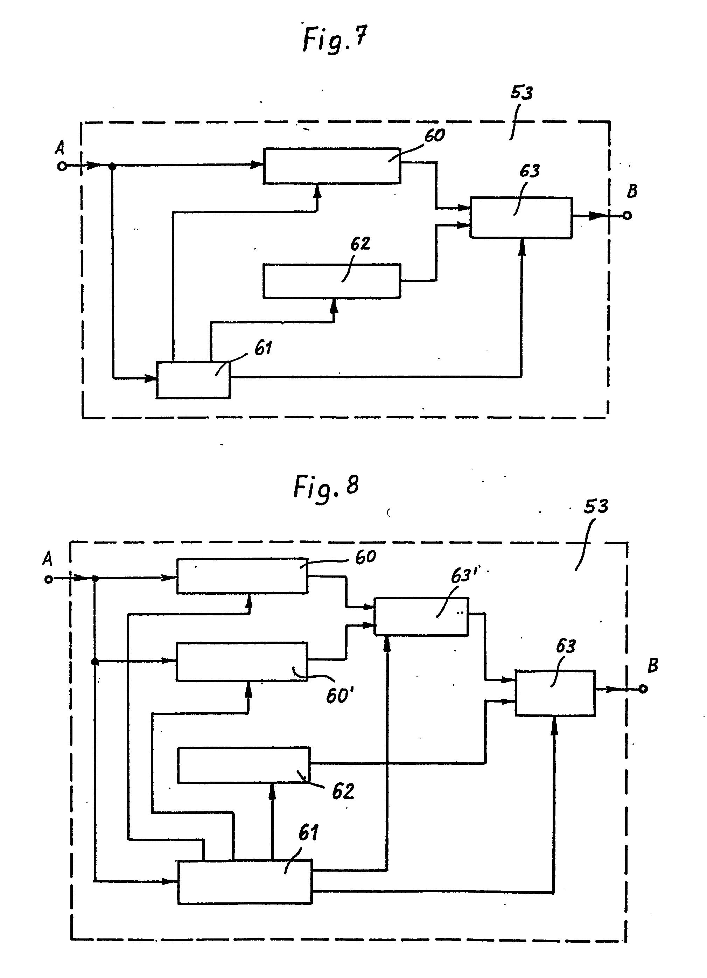

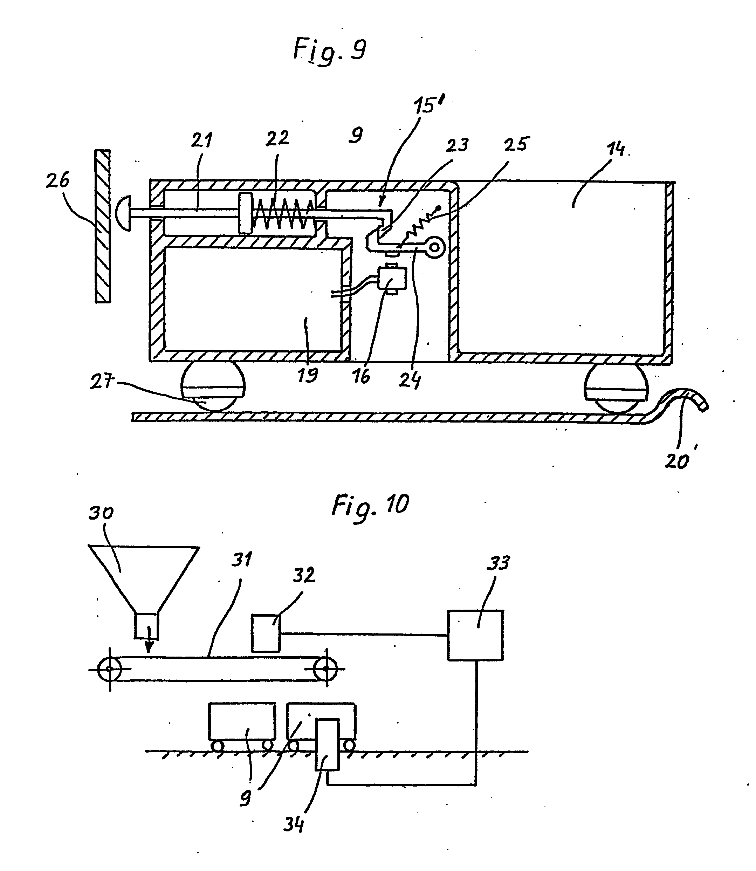

Die Erfindung wird nun an Hand der Zeichnung näher erläutert. Dabei zeigt Fig. 1 eine Ansicht einer Ausführungsform einer erfindungsgemäßen Lagereinrichtung, Fig. 2 einen Schnitt nach der Linie II-II in Fig. 1, Fig. 3 schematisch die Steuerung der Behälterauswahl, Fig. 4 schematisch den Aufbau einer Eingabe- und Verarbeitungseinrichtung, Fig. 5 schematisch den Aufbau eines Behälters für eine erfindungsgemäße Lagereinrichtung, Fig. 6 schematisch die Empfangs- und Auswerteeinrichtung eines Behälters, Fig. 7 und 8 verschiedene Ausführungsformen für eine Auswerteeinrichtung, Fig. 9 eine weitere Ausführungsform eines Behälters und Fig. 10 schematisch eine Einrichtung zum Beschicken der Behälter.

Bei der Lagereinrichtung nach Fig. 1 und 2 ist ein Aufnahmegestell 4 vorgesehen, bei dem zwischen zwei Seitenwandteilen 1 Ablagen 2 angeordnet sind, deren Stellflächen 3 horizontal verlaufen, jedoch über die Tiefe des Aufnahmegestells 4 nach vorne geneigt sind. Vor jeder Ablage 2 bzw. jeder Stellfläche 3 ist ein horizontal verlaufendes Förderband 5 angeordnet, welches endlos über Antriebs- und Umlenkrollen umläuft.

An der linken Seite des Aufnahmegestells 4 ist ein Vertikalförderer 6 angeordnet der in Führungen 7 gleitet. Weiters sind in den Höhenbereichen der oberen Kanten der Stellflächen 3 Schubstempel 8 angeordnet mit denen Behälter 9 vom Vertikalförderer 6 auf eine Stellfläche 3 überschoben kann.

An der rechten Seite des Aufnahmegestells 4 ist ein weiterer Vertikalförderer 10 im Bereich der Förderbänder 5 angeordnet, auf dessen in Führung 7 gleitenden Plattformen 11 die Behälter 9 von einem Förderband aufgeschoben werden können.

Wie aus Fig. 2 ersichtlich sind unterhalb der Ablagen 2 ein unlaufender Kettenförderer 12 od. dgl. angeordnet, der mit je einem Finger 13, 13' an der vorderen und hinteren Längskante der Ablage 2 diese übergreift. Damit ist es möglich, die an beiden Seiten über die Stellfläche 3 vorragenden Behälter 9 z. B. in Richtung zum rechten Vertikalförderer 10 zusammenzuschieben, wobei bei einem Überschreiten einer bestimmten Zugkraft der Antrieb des Kettenförderers stillgesetzt wird und die Finger in einer Richtung kippbar mit den Ketten verbunden sind um in der Gegenrichtung die Behälter 9 nicht mitzunehmen.

Wie weiters aus Fig. 2 ersichtlich ist, weisen die Behälter 9 außer dem Laderaum 14 noch ein Abteil auf, in dem ein Elektromagnet 16, an dessen Anker ein durch die Feder 17 belasteter Haken 18 anglenkt ist, der gemeinsam mit dem Elektromagnet die Auslöseeinrichtung 15 bildet, untergebracht ist. Weiters ist in diesem Abteil noch eine Antenne und eine Empfangs- und Code-Erkennungseinrichtung 19 untergebracht.

Der Haken 18 hintergreift eine oberhalb einer jeden Stellfläche 3 angeordnete parallel zu dieser verlaufenden Stange 20 und hält damit den Behälter 9 auf der Stellfläche 3, von der er sonst aufgrund der Neigung derselben abrutschen würde.

Bei entsprechend isolierter Halterung der Stange 20 in den Seitenwandteilen 1 kann die Stromversorgung der Empfangs- und Codeerkennungseinrichtung sowie der Auslöseeinrichtung eines jeden Behälters 9 über diese Stangen 20 erfolgen, die mit zwei voneinander isolierten Stromleitbahnen versehen sein kann. Von diesen kann der Strom über entsprechende in dem Haken 18 eines jeden Behälters 9 angeordnete Kontaktbahnen abgenommen werden. Selbstverständlich ist auch die Anordnung von Batterien in den Behälter 9 zu deren Stromversorgung möglich.

Gelangt nun ein Signal zu der Empfangs- und Codeerkennungseinrichtung 19 eines Behälters 9 und wird dieses als dem eigenen Code dieses Behälters entsprechend erkannt so zieht der Elektromagnet 16 an und bringt den Haken 18 außer Eingriff mit der Stange 20. Dadurch rutscht der Behälter 9 auf das Förderband 5 und gelangt zum Vertikalförderer 10, der ihn zu einer Ausgabestation bringt.

Danach können die auf derselben Stellfläche 3 verbleibenden Behälter 9 mit dem Kettenförderer 12 zusammengeschoben werden.

Zum Beschicken des Aufnahmegestells 4 können die Behälter 9 mit dem Vertikalförderer 6 auf die Höhe der gewünschten Stellfläche 3 gebracht und dann mit dem Schubstempel 8 auf diese überschoben werden, wobei der Haken 18 mit der Stange 20 in Eingriff kommt.

Die Steuerung der Lagereinrichtung wird an Hand der Fig. 3 bis 8 erläutert.

Fig. 3 zeigt den prinzipiellen Aufbau der Steuerung. Von der Eingabe- und Verarbeitungseinheit 30 wird das den Code des gewünschten Behälters 9 enthaltende Signal einem Modulator 31 zugeleitet, der das Signal einer Trägerwelle auf moduliert, wobei z. B. die Pulscodemodulation oder Frequenzmodulation sehr zweckmäßige Modulationsverfahren darstellen. Dieses modulierte Signal wird dann im Sender 32 verstärkt und über die Antenne 33 abgestrahlt.

Dieses in den Lagerraum abgestrahlte Signal wird von den Behältern 9 bzw. deren Empfangs- und Codeerkennungseinrichtungen empfangen und ausgewertet.

Bei dem Behälter 9, dessen Code dem Code des empfangenen Signals entspricht, wird die Auslöseeinrichtung aktiviert und rutscht von der Stellfläche 3 auf das gegebenenfalls ständig umlaufende Förderband 5 ab. Selbstverständlich ist es auch möglich die Förderbänder 5 erst mit der Abgabe eines Signals von der Eingabe und Verarbeitungseinrichtung 30 oder erst durch das Auftreffen eines Behälters 9 zu starten.

Beim dargestellten Ausführungsbeispiel werden die Transporteinrichtungen, wie die Förderbänder 5 und der Vertikalförderer 10 durch ein Signal von der Eingabe- und Verarbeitungseinheit 30 zu einer diese steuernden Transportsteuerungseinheit 33 gestartet.

Die Eingabe- und Verarbeitungseinheit 30 besteht, wie aus Fig. 2 ersichtlich, zweckmäßigerweise aus mehreren mit einem Rechner 40 verbundenen Eingabestationen 41. Weiters sind an dem Rechner 40 ein Datenspeicher 42 und ein Drucker 43 angeschlossen.

Dadurch ist es möglich über die Eingabestationen die in den Lagerbestand aufgenommenen oder zu entnehmenden Mengen der einzelnen Lagerartikel in den Rechner 40 einzugeben, der den aktuellen Lagerstand ermittelt und in den Datenspeicher 42 eingibt bzw. über den Drucker 43 ausgibt. Gleichzeitig gibt der Rechner 40 den Code jenes Behälters 9 an eine Interface-Schaltung 44 ab, in dem der entsprechende Lagerartikel gelagert wird. Von der Interface-Schaltung 44 gelangt das den entsprechenden Code enthaltene Signal zum Modulator 31.

Wie in Fig. 5 schematisch dargestellt, weisen die Behälter 9 einen Laderaum 14 und ein davon getrenntes Abteil auf, in dem die Empfangs- und Codeerkennungseinrichtung 19 und die von dieser gesteuerten Auslöseeinrichtung 15 untergebracht sind.

Die Empfangs- und Codeerkennungseinrichtung 19 besteht, wie aus Fig. 6 ersichtlich aus der Antenne 50, von der auch das empfangene modulierte Signal zur Empfängerschaltung 51 gelangt, wo es verstärkt wird. Dieser Empfängerschaltung 51 ist ein Demodulator 52 nachgeschaltet. Das demodulierte Signal gelangt zu einer Auswerte- und Entscheidungslogik 53 die einen Speicher für den dem Behälter 9 eigenen Code und eine Vergleichsschaltung aufweist, die den Code des eingelangten Signals mit dem gespeicherten Code vergleicht.

Beispiele für einen möglichen Aufbau einer geeigneten Auswerte- und Entscheidungslogik 53 sind in den Fig. 7 und 8 dargestellt.

Bei einer Ausführungsform nach Fig. 7 wird das beim Eingang A einlangende demodulierte Signal einem Schreib-Lesespeicher 60, der z. B. durch ein Schieberegister gebildet sein kann, und einer Ablaufsteuerung 61 zugeführt, die mit ihrerseits mit dem Schreib-Lesespeicher 60, einem Speicher 62, in dem der den betreffenden Behälter zugeordnete Code eingeschrieben ist und der Vergleichsschaltung 63 verbunden ist.

Das einlangende Signal wird in den Schreib-Lesespeicher 60 eingeschrieben. Danach steuert die Ablaufsteuerung 61 den Schreib-Lesespeicher 60, und den Speicher 62 an, sodaß das jeweils erste Element des eingeschriebenen Codes der Vergleichsschaltung 63 zugeführt wird. Bei Identität dieser Elemente steuert die Ablaufsteuerung 61 die Speicher 60, 62 abermals zur Abgabe der zweiten Elemente des eingeschriebenen Codes an.

Ergibt sich bei einem Vergleich keine Identität so unterbricht die Ablaufsteuerung 61 den weiteren Vergleich, löscht die Schreib-Lesespeicher 60 und stellt den Speicher 62 zurück.

Sind sämtliche Elemente der in den Speichern 60 und 62 eingeschriebenen Codes identisch so gibt die Vergleichsschaltung 63 an ihrem Ausgang B ein Signal ab, das die Auslöseeinrichtung 15 aktiviert.

Die Auswerte- und Entscheidungslogik nach Fig. 8 zeichnet sich durch eine erhöhte Sicherheit gegen eine Beeinflussung durch Störsignale aus.

Sie weist einen der Auswerte- und Entscheidungslogik nach der Fig. 7 ähnlichen Aufbau auf, doch ist ein zusätzlicher Schreib-Lesespeicher 60' und eine zusätzliche Vergleichsschaltung 63' vorgesehen. Diese sind ebenfalls von der Ablaufsteuerung 61 gesteuert.

Ein weiterer Unterschied besteht darin, daß die Eingabe- und Codeerzeugungseinheit 30 zum Anfordern eines bestimmten Behälters 9 nicht nur ein dessen Code entsprechendes Signal abgibt, sondern dieses Signal nach einer kurzen Pause wiederholt.

Diese über den Demodulator 52 einlangenden Signale gelangen zur Auswerte- und Entscheidungslogik, wobei das zuerst einlangende Signal in den Schreib-Lesespeicher 60 eingeschrieben wird. Durch die Ablaufsteuerung 61 bedingt wird das später einlangende Signal in den Schreib-Lesespeicher 60' eingeschrieben. Diese eingeschriebenen Signale werden Element für Element in der Vergleichsschaltung 63' verglichen und nur bei Identität in einen internen Zwischenspeicher dieser Vergleichsschaltung 63' eingeschrieben. Ist dies nicht der Fall, so löscht die Ablaufsteuerung 61 die Speicherinhalte der Specher 60, 60' und des Zwischenspeichers der Vergleichsschaltung 63'.

Sind die in den Schreib- und Lesespeichern 60, 60' eingeschriebenen Signale dient, sodaß eine Beeinflussung durch Störsignale ausgeschlossen werden kann, werden die im internen Zwischenspeicher der Vergleichsschaltung 63' gespeicherten Elemente des Codesignales Element für Element mit dem im Speicher 62 eingeschriebenen Code in der Vergleichsschaltung 63 verglichen und bei Identität ein Signal abgegeben, welches die Auslöseeinrichtung 15 aktiviert.

Ist keine Identität gegeben, so löscht die Ablaufsteuerung die Inhalte der Schreib-Lesespeicher 60, 60' und setzt die Vergleichsschaltungen 63, 63' sowie den Speicher 62 zurück.

Bei der Ausführungsform nach Fig. 9 ist die Rückhalteeinrichtung durch einen an der Vorderkante der waagrechten Stellfläche 3 angeordneten Wulst 20 gebildet. Die Auslöseeinrichtung 15 besteht dabei aus dem Stößel 21, der von der Feder 22 beaufschlagt ist. Der Stößel 21 weist weiters eine Nase 23, die im gespannten Zustand der Feder, wie aus Fig. 9 ersichtlich, von einer Sperrklinke 24 hintergriffen ist, die durch eine Feder 25 in Eingriff mit der Nase 23 gehalten und schwenkbar im Behälter 9 gehalten ist. Aus dieser Eingriffsstellung ist die Sperrklinke 24 durch Erregung des Elektromagneten 16 bringbar, der von der Empfangs- und Codeerkennungseinrichtung 19 gesteuert ist.

Wird der Elektromagnet 16 erregt, so wird die Sperrklinke 24 zurückgezogen und der Stößel 21 freigegeben. Dieser trifft auf eine im Bereich der Hinterkante der Stellfläche 3 angeordnete Prallwand 26 auf und stößt so den Behälter 9 nach vor, der auf Kugelrollen 27 abgestützt ist. Dabei rutscht der Behälter 9 über den Wulst 20 und gelangt auf eine Fördereinrichtung die ihn zu einer Ausgabestation bringt.

Fig. 10 zeigt schematisch eine automatische Beschickungseinrichtung für die erfindungsgemäßen Behälter. Die zu lagernden mit einem Code versehenen Gegenstände werden in den Fülltrichter 30 geleert und gelangen von dort auf eine Fördereinrichtung 31 und werden zu einem Behälter 9 befördert.

Dabei werden sie an einer Codeerkennungsvorrichtung 32 vorbei geführt, der die dem erfaßten Code entsprechenden Signale einem Computer 33 zuführt.

Die Behälter 9 werden bei ihrem Transport zur Füllstelle ebenfalls an einer Codeerkennungsvorrichtung 34 vorbeigeführt, die ebenfalls mit dem Computer 33 verbunden ist. Dadurch kann dieser den Inhalt eines jeden Behälters 9 ermitteln und speichern. Die gefüllten Behälter 9 gelangen dann zu einer weiteren Fördereinrichtung die sie auf die Stellflächen 3 eines Aufnahmegestells bringen und die z. B. wie an Hand der Fig. 1 und 2 erläutert, ausgebildet sein kann.

**Patentansprüche**

1. Lagereinrichtung für eine Vielzahl von verschiedenen zu lagernden Gegenständen, insbesondere Packungen von Medikamenten bei der mit je einem Gegenstand oder einer geringen Anzahl verschiedener zu lagernder Gegenstände beschickbare lose Behälter (9) in einem Aufnahmegestell (4) auf Stellflächen (3) verschiebbar gehalten sind, wobei die Behälter in einer Ausstoßrichtung belastet und mittels mindestens einer auslösbaren Rückhalteeinrichtung (18, 20, 20') auf der Stellfläche gehalten sind, dadurch gekennzeichnet, daß jeder Behälter (9) in einer eigenen Rückhalteeinrichtung (18, 20, 20') in den Aufnahmegestell (4) gehalten ist, welche Rückhalteeinrichtungen mittels diesen zugeordneten Auslöseeinrichtungen (15, 16, 15', 16') lösbar oder überwindbar sind, wobei die Ausstoßrichtung jedes Behälters (9) senkrecht zur Längserstreckung der die Behälter nebeneinander aufnehmenden Stellflächen (3) verläuft, und jedem Behälter (9) in an sich bekannter Weise ein bestimmter Code zugeordnet ist und für jeden Behälter (9) eine an sich bekannte Empfangs- und eine Code-Erkennungseinrichtung (19) vorgesehen ist, die bei Einlangen von dem einem Behälter zugeordneten Code entsprechenden Signalen die Auslöseeinrichtung (15, 16, 15', 16') der den entsprechenden Behälter (9) haltenden Rückhalteeinrichtung (18, 20, 20') aktiviert.

2. Lagereinrichtung nach Anspruch 1, dadurch gekennzeichnet, daß jeder Behälter (9) mit einer Antenne (50), sowie einer Empfangs- und Code-Erkennungseinrichtung (19) und einer dieser nachgeschalteten Auslöseeinrichtung (15) versehen ist, wobei die zur Abstrahlung der dem Code je eines Behälters (9) entsprechenden Signale vorgesehene Antenne (33) bzw. die dieser zugeordnete Code-Erzeugungseinheit vorzugsweise von einer Eingabe- und Verarbeitungseinheit (30) gesteuert ist, die gegebenen falls durch einen mit Eingabestationen (41), einem Datenspeicher (42) und einem Drucker (43) verbundenen Rechner (40) gebildet ist.

3. Lagereinrichtung nach Anspruch 1 oder 2, dadurch gekennzeichnet, daß die Rückhalteeinrichtung durch einen bei vollständig in das Aufnahmegestell (4) eingeschobenen Behälter (9) eine Kante des Aufnahmegestells hintergreifenden Haken (18) gebildet ist, der mit dem Anker eines die Auslöseeinrichtung bildenden Elektromagneten (16) verbunden und mittels einer Feder (17) gegen seine Halteposition vorgespannt ist (Fig. 2).

4. Lagereinrichtung nach einem der Ansprüche 1 bis 3, bei der gegen die Horizontale geneigte Stellflächen für die Behälter vorgesehen sind und vor den unteren Kanten einer jeden dieser Stellflächen ein Förderband angeordnet ist, dadurch gekennzeichnet, daß mindestens ein Vertikalförderer (6, 10) vorgesehen ist, der seitlich der Stellflächen (3) bzw. der Förderbänder (5) angeordnet ist und daß weiters Vorrichtungen (8) zum Überschieben von Behältern (9) vom Vertikalförderer (6) auf eine Stellfläche (3) vorgesehen sind.

5. Lagereinrichtung nach Anspruch 4, dadurch gekennzeichnet, daß im Bereich jeder Stellfläche (3) eine sich im wesentlichen über die gesamte Länge der Stellfläche (3) erstreckende Fördereinrichtung (12, 13, 13') angeordnet ist, die an einem auf der Stellfläche (3) befindlichen Behälter (9) angreift.

6. Lagereinrichtung nach Anspruch 1 und 3, dadurch gekennzeichnet, daß das Aufnahmegestell eine einer Schraubenlinie folgende Stellfläche aufweist, die außerdem gegen eine parallel zu ihr laufende Rinne in Querrichtung nach unten geneigt ist.

7. Lagereinrichtung nach einem der Ansprüche 1, 2 und 4 bis 6, dadurch gekennzeichnet, daß die Rückhalteeinrichtung durch einen sich an der Vorderkante der Stellfläche (3) erstreckenden Wulst (20') und die Auslöseeinrichtung (15') durch einen von einer Feder (22) beaufschlagten Stößel (21) gebildet ist, der mittels einer über einen Elektromagneten (16') entriegelbaren Sperrklinke (24) in seiner Spannstellung haltbar ist, wobei im Bereich der Hinterkante der Stellfläche (3) eine Prallwand (26) angeordnet ist (Fig. 9).

8. Lagereinrichtung nach Anspruch 7, dadurch gekennzeichnet, daß die Behälter (9) auf Kugelrollen (27) abgestützt sind.

**Claims**

1. Storage device for a plurality of various objects to be stored and in particular packages of medicines, in which device loose containers (9), which can be filled with one object each or with a small number of various objects to be stored, are held in a receiving rack (4) in a manner so as to be displaceable on placement surfaces (3), in which arrangement the containers are loaded in an ejection direction and are held by means of at least one releasable retaining device (18, 20, 20') on the placement surface, characterized in that each container (9) is held in its own retaining device (18, 20, 20') in the receiving rack (4), which retaining devices can be released or overcome by means of releasing devices (15, 16, 15', 16') allocated to them, in which arrangement the direction of ejection of each container (9) extends perpendicularly to the longitudinal extent of the placement surfaces (3) which accommodate the containers adjacently to each other, and a particular code is allocated to each container (9) in a manner known in itself and for each container (9) a receiving and code recognition device (19), known in itself, is provided which activates the releasing device (15, 16, 15', 16') of the retaining device (18, 20, 20') holding the corresponding container (9) when signals corresponding to the code allocated to a container are received.

2. Storage device according to Claim 1, characterized in that each container (9) is provided with an antenna (50) and a receiving and code recognition device (19) and a releasing device (15) which follows the latter, in which arrangement the antenna (33), which is provided for radiating the signals corresponding to the code of one container (9) each, or the code generation unit allocated to this antenna, is preferably controlled by an input and processing unit (30) which is formed, if necessary, by a computer (40) which is connected to input stations (41), a data memory (42) and a printer (43).

3. Storage device according to Claim 1 or 2, characterized in that. the retaining device is formed by a hook (18) which reaches behind an edge of the receiving rack when the container (9) is completely pushed into the receiving rack (4) and which is connected to the armature of an electromagnet (16) forming the releasing device and is pretensioned with respect to its holding position by means of a spring (17) (Fig. 2).

4. Storage device according to one of Claims 1 to 3, in which device placement surfaces inclined with respect to the horizontal are provided for the containers and in front of the lower edges of each one of these placement surfaces a conveyor belt is arranged, characterized in that a least one vertical conveyor (6, 10) is provided which is arranged on the side of the placement surfaces (3) or the conveyor belts (5) and that in addition devices (8) for pushing containers (9) over from the vertical conveyor (6) onto a placement surface (3) are provided.

5. Storage device according to Claim 4, characterized in that, in the area of each placement surface (3), a conveyor device (12, 13, 13') is arranged which essentially extends over the entire length of the placement surface (3) and which engages a container (9) located on the placement surface (3).

6. Storage device according to Claims 1 and 3, characterized in that the receiving rack is provided with a placement surface which follows a helical line and which, in addition, is inclined downwards in the transverse direction with respect to a channel extending parallel to it.

7. Storage device according to one of Claims 1, 2 and 4 to 6, characterized in that the retaining device is formed by a bead (20') which extends along the front edge of the placement surface (3) and the releasing device (15') is formed by a ram (21) which is loaded with a spring (22) and which can be held in its tensioned position by means of a detent catch (24) which can be unlatched via an electromagnet (16'), a rebounding wall (26) being arranged in the area of the back edge of the placement surface (3) (Fig. 9).

8. Storage device according to Claim 7, characterized in that the containers (9) are supported on ball castors (27).

**Revendications**

1. Dispositif de stockage d'un grand nombre d'objets différents à stocker, notamment des paquets de médicaments, dans lequel des récipients vides (9), pouvant recevoir chacun un objet ou un petit nombre d'objets différents à stocker, sont maintenus dans un châssis récepteur (4) de façon à pouvoir se déplacer sur des surfaces de présentation (3), les récipients étant chargés dans une direction d'évacuation et étant maintenus sur la surface de présentation à l'aide d'au moins un dispositif de retenue déclenchable (18, 20, 20'), caractérisé par le fait que chaque récipient (9) est maintenu dans un dispositif de retenue propre (18, 20, 20') dans le châssis récepteur (4), lesdits dispositifs de retenue peuvent être déclenchés ou libérés au moyen de dispositifs de déclenchement associés (15, 16, 15', 16'), la direction d'évacuation de chaque récipient (9) s'étendant perpendiculairement à la dimension longitudinale des surfaces de présentation (3) recevant les récipients les uns à côté des autres, et à chaque récipient (9) est associé d'une manière connue un code déterminé et il est prévu pour chaque récipient (9) un dispositif de réception et de détection de code connu en soi (19), qui, lors de la réception de signaux correspondant au code associé à un récipient, actionne le dispositif de déclenchement (15, 16, 15', 16') du dispositif de retenue (18, 20, 20') maintenant le récipient correspondant (9).

2. Dispositif de stockage selon la revendication 1, caractérisé par le fait que chaque récipient (9) est pourvu d'une antenne (50) ainsi que d'un dispositif de réception et de détection de code (19) et d'un dispositif de déclenchement (15) placé en série avec celui-ci, l'antenne (33) prévue pour l'émission des signaux correspondant au code de chaque récipient (9), ou bien le générateur de code associé à cette antenne, étant commandée de préférence par une unité d'entrée et de traitement (30), qui est constituée le cas échéant par un calculateur (40) relié à des postes d'entrée (41), à une mémoire de données (42) et à une imprimante (43).

3. Dispositif de stockage selon la revendication 1 ou 2, caractérisé par le fait que le dispositif de retenue est constitué par un crochet (18) s'accrochant à l'arrière d'un bord du châssis récepteur (4) dans le cas où un récipient (9) est complètement engagé dans ce châssis récepteur, ledit crochet étant relié à l'armature d'un électro-aimant (16) constituant le dispositif de déclenchement et étant rappelé par un ressort (17) dans sa position de retenue (Fig. 2).

4. Dispositif de stockage selon l'une des revendications 1 à 3, dans lequel il est prévu pour les récipients des surfaces de présentation inclinées par rapport à l'horizontale et une bande transporteuse est disposée en avant des bords inférieurs de chacune desdites surfaces de présentation, caractérisé par le fait qu'il est prévu au moins un transporteur vertical (6, 10), qui est disposé sur le côté des surfaces de présentation (3) ou des bandes transporteuses (5) et qu'il est prévu d'autres dispositifs (8) pour transférer des récipients (9) du transporteur vertical (6) sur une surface de présentation (3).

5. Dispositif de stockage selon la revendication 4, caractérisé par le fait que dans la zone de chaque surface de présentation (3) est disposé un dispositif transporteur (12, 13, 13') s'étendant sensiblement sur toute la longueur de la surface de présentation (3) et qui coopère avec un récipient (9) se trouvant sur la surface de présentation (3).

6. Dispositif de stockage selon les revendications 1 et 3, caractérisé par le fait que le châssis récepteur comporte une surface de présentation suivant une ligne hélicoïdale et qui est en outre inclinée vers le bas dans une direction transversale vers une goulotte disposée parallèlement à celle-ci.

7. Dispositif de stockage selon l'une des revendications 1, 2 et 4 à 6, caractérisé par le fait que le dispositif de retenue est constitué par un bourrelet (20') s'étendant sur le bord avant de la surface de présentation (3) et le dispositif de déclenchement (15') est constitué par un poussoir (21) rappelé par un ressort (22) et qui peut être retenu dans sa position de verrouillage au moyen d'un cliquet de blocage (24) pouvant être déverrouillé par l'intermédiaire d'un électro-aimant (16'), une paroi de rebondissement (26) étant disposée dans la zone du bord arrière de la surface de présentation 3 (Fig. 9).

8. Dispositif de stockage selon la revendication 7, caractérisé par le fait que les récipients (9) sont en appui sur des galets de roulement (27).

0 099 353

Fig.1

Fig.2

1

# Fig. 3

Fig. 4

Fig. 5

Fig. 6

# Fig. 7

# Fig. 8

Fig. 9

Fig. 10